(19) **Europäisches Patentamt**
**European Patent Office**
**Office européen des brevets**

(11) **EP 1 959 593 A2**

(12) **EUROPEAN PATENT APPLICATION**

(43) Date of publication:
**20.08.2008 Bulletin 2008/34**

(51) Int Cl.:
**H04H 20/71** (2008.01)

(21) Application number: **07119631.5**

(22) Date of filing: **30.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **06.12.2006 KR 20060123397**
**22.05.2007 KR 20070049956**

(71) Applicant: **Electronics and Telecommunications
Research Institute
Daejeon-city (KR)**

(72) Inventors:
- **Lee, In Ki
  Busan-city (KR)**
- **Kim, Tae Hoon
  Seoul (KR)**
- **Choi, Seung Hyun
  Daejeon-city (KR)**
- **Chang, Dae Ik
  Daejeon-city (KR)**

(74) Representative: **Betten & Resch
Patentanwälte
Theatinerstrasse 8
80333 München (DE)**

(54) **Apparatus and method of transmitting and receiving digital broadcasting**

(57)    A method and apparatus for digital broadcast transmission and reception are provided. The apparatus for digital broadcast transmission includes: an encoding unit performing first-encoding of first digital broadcasting data; an encoding unit performing second-encoding of second digital broadcasting data; a hierarchical mapping unit performing hierarchical mapping to an IQ signal, by setting the first-encoded signal as a high priority (HP), and the second-encoded signal as a low priority (LP); and a modulation unit performing orthogonal modulation of the hierarchically mapped IQ signal by a high-order modulation method.

## FIG. 3

**Description**

CROSS-REFERENCE TO RELATED PATENT APPLICATIONS

This application claims the benefit of Korean Patent Application No. 10-2006-0123397, filed on December 6, 2006 and Korean Patent Application No. 10-2007-0049956, filed on May 22, 2007 in the Korean Intellectual Property Office, the disclosures of which are incorporated herein in their entirety by reference.

BACKGROUND OF THE INVENTION

1. Field of the Invention

The present invention relates to a method and apparatus for digital broadcast transmission and reception, and more particularly, to a method and apparatus in which a high-order modulation method is applied to a satellite digital multimedia broadcasting (DMB) system.

This work was supported by the IT R&D program of MIC/IITA.[2005-S013-02, Development of Broadband Adaptive Satellite Communications and Broadcasting Convergence Technology]

2. Description of the Related Art

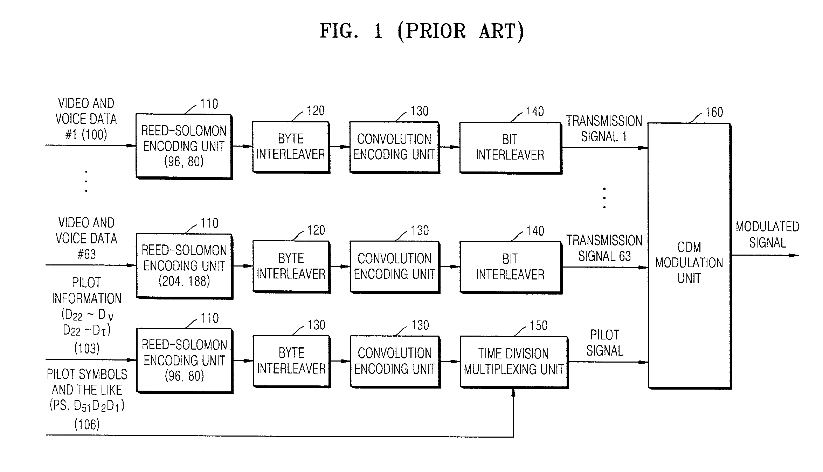

FIG. 1 is a diagram illustrating a structure of a satellite digital multimedia broadcasting (DMB) transmission system according to conventional technology.

Referring to FIG. 1, the conventional satellite DMB transmission system is composed of a Reed-Solomon encoding unit 110, a byte interleaver 120, a convolution encoding unit 130, a bit interleaver 140, a time division multiplexing unit 150, and a code division multiplexing (CDM) modulation unit 160, and transmits video and voice data by using motion picture experts group (MPEG)-2, MPEG-4 elementary stream (ES) and MPEG-2 transport stream (TS) standards.

The Reed-Solomon encoding unit 110 adds a parity for error correction to input video and voice data, and uses Reed-Solomon coding to encode the data 100. The byte interleaver 120 interleaves the Reed-Solomon encoded data in units of bytes. The convolution encoding unit 130 uses convolution to encode the byte-interleaved data. The bit interleaver 140 interleaves the convolution encoded data in units of bits and generates a transmission signal.

Pilot data 103 for controlling a receiver is also encoded by the Reed-Solomon encoding unit 110, the byte interleaver 120, and the convolution encoding unit 130. The time division multiplexing unit 150 time division multiplexes the convolution encoded pilot data and pilot symbols 106, and generates a pilot signal.

The CDM modulation unit 160 modulates both the transmission signals generated in the bit interleaver 140 and the pilot signals generated in the time division multiplexing unit 150, by using a CDM method.

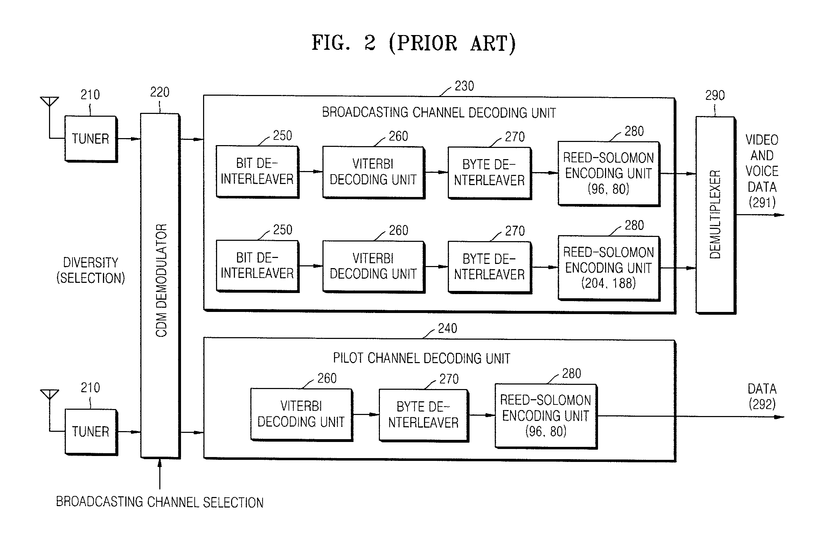

FIG. 2 is a diagram illustrating a structure of a satellite DMB reception system according to conventional technology.

Referring to FIG. 2, the conventional satellite DMB reception system is composed of a tuner 210, a CDM demodulation unit 220, a broadcasting channel decoding unit 230, a pilot channel decoding unit 240, and a demultiplexer 290,

The CDM demodulation unit 220 demodulates a signal extracted by the tuner 210 in the CDM method, and bit-splits the signal into a broadcasting channel signal 223 and a pilot channel signal 226.

The broadcasting channel decoding unit 230 is composed of a bit de-interleaver 250, a Viterbi decoding unit 260, a byte de-interleaver 270, and a Reed-Solomon encoding unit 280, and decodes the broadcasting channel signal 223 That is, the broadcasting channel signal 223 is bit de-interleaved in the bit de-interleaver 250, decoded in the Viterbi decoding unit 260, byte de-interleaved in the byte de-interleaver 270, and decoded by using the Reed-Solomon method in the Reed-Solomon decoding unit 280.

The demultiplexer 290 demultiplexes the data decoded in the broadcasting channel decoding unit 230, and generates video and voice data 291.

In the pilot channel decoding unit 240, the pilot channel signal 226 is decoded in the Viterbi decoding unit 260, byte de-interleaved in the byte de-interleaver 270, and decoded in the Reed-Solomon method in the Reed-Solomon decoding unit 280, thereby generating pilot data 292 for controlling the receiver.

In the case of a portable terminal, whether or not to use antenna diversity can be determined by considering the size and portability of the terminal.

The current satellite DMB services are provided in relation to 11 video channels and 26 audio channels as one of these personal portable multimedia services. In order to provide these services distinctively from other multimedia services, it is necessary to improve the quality of transmission or to increase the capacity of transmission, As a simple example, a modulation and demodulation method having a higher transmission efficiency than that of conventional systems or a channel encoding and decoding method having an excellent performance may be applied. However, switching to these methods requires replacement of whole systems which are currently being used.

SUMMARY OF THE INVENTION

The present invention provides a method and apparatus for digital broadcast transmission and reception which can provide a reverse compatibility function based on a current system while providing improvement in transmission quality or an increase in the capacity of transmission.

According to an aspect of the present invention, there is provided an apparatus for digital broadcast transmission including: a first encoding unit performing first-encoding of first digital broadcasting data; a second encoding unit performing second-encoding of second digital broadcasting data; a hierarchical mapping unit performing hierarchical mapping of the data to an in-phase and quadrature-phase (IQ) signal, by setting the first-encoded signal as a high priority (HP), and the second-encoded signal as a low priority (LP); and a modulation unit performing orthogonal modulation of the hierarchically mapped IQ signal by a high-order modulation method.

According to another aspect of the present invention, there is provided a method of digital broadcast transmission including: performing first-encoding of first digital broadcasting data and performing second-encoding of second digital broadcasting data; performing hierarchical mapping of the data to an IQ signal, by setting the first-encoded signal as an HP, and the second-encoded signal as an LP; and performing orthogonal modulation of the hierarchically mapped IQ signal by a high-order modulation method.

According to another aspect of the present invention, there is provided an apparatus for digital broadcasting reception includes: a demodulation unit performing orthogonal demodulation of a received signal in a high-order demodulation method; a soft output demapping unit bit-splitting the same number of bits as the order of the high-order modulation, by performing soft output of the demodulated signal for each bit; a first decoding unit performing first-decoding of a signal which is extracted with a high priority from the signals bit-splited by soft output; and a second decoding unit performing second-decoding of a signal which is extracted with a low priority from the signals bit-splited by soft output.

According to another aspect of the present invention, there is provided a method of digital broadcast reception including: performing orthogonal demodulation of a received signal in a high-order demodulation method; bit-splitting the same number of bits as the order of the high-order modulation, by performing soft output of the demodulated signal for each bit; performing first-decoding of a signal which is extracted with an HP from the signals bit-splited by soft output, and performing second-decoding of a signal which is extracted with an LP from the signals bit-splited by soft output.

BRIEF DESCRIPTION OF THE DRAWINGS

The above and other features and advantages of the present invention will become more apparent by describing in detail exemplary embodiments thereof with reference to the attached drawings in which:

FIG. 1 is a diagram illustrating a structure of a satellite digital multimedia broadcasting (DMB) transmission system according to conventional technology;

FIG. 2 is a diagram illustrating a structure of a satellite DMB reception system according to conventional technology;

FIG. 3 is a diagram illustrating a structure of a satellite DMB transmission system using hierarchical high-order modulation according to an embodiment of the present invention;

FIG. 4 is a diagram illustrating a structure of a satellite DMB transmission system using hierarchical 16-ary amplitude and phase shift keying (16APSK) according to an embodiment of the present invention;

FIG. 5 is a diagram illustrating a hierarchical 16APSK constellation diagram used in the present invention according to an embodiment of the present invention;

FIG. 6 is a diagram illustrating a structure of a DMB reception apparatus using a high-order hierarchical demodulation method according to an embodiment of the present invention;

FIG. 7 is a diagram illustrating a structure of a transmission and reception system using hierarchical high-order modulation according to an embodiment of the present invention;

FIG. 8 is a diagram illustrating a structure of a reception apparatus using a low-density parity check (LDPC) encoding and high-order hierarchical modulation method according to an embodiment of the present invention;

FIG. 9 is a flowchart illustrating a satellite DMB transmission method using a high-order hierarchical modulation method according to an embodiment of the present invention;

FIG. 10 is a flowchart illustrating a satellite DMB reception method using a high-order hierarchical modulation method according to an embodiment of the present invention; and

DETAILED DESCRIPTION OF THE INVENTION

The present invention will now be described more fully with reference to the accompanying drawings, in which exemplary embodiments of the invention are shown.

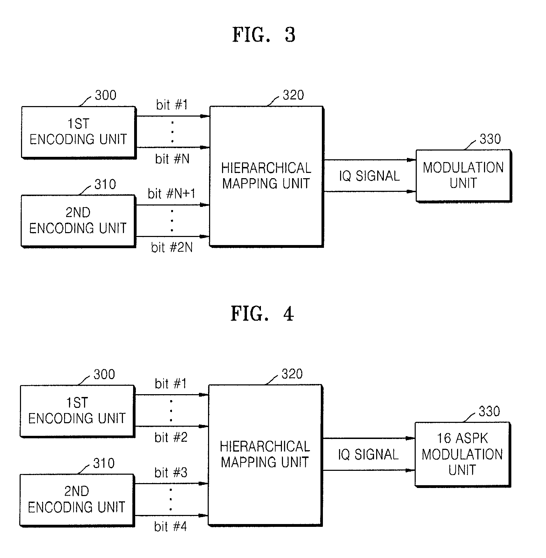

FIG. 3 is a diagram illustrating a structure of a satellite digital multimedia broadcasting (DMB) transmission system using hierarchical high-order modulation according to an embodiment of the present invention.

Referring to FIG. 3, the apparatus for transmission is composed of a first encoding unit 300, a second encoding unit 310, a hierarchical mapping unit 320, and a modulation unit 330, and adds additional data for a new service or high quality service to transmission data of conventional satellite DMB services, and transmits the data.

The first encoding unit 300 performs the same function as that of the encoding unit of the conventional satellite DMB system illustrated in FIG. 1, and encodes the transmission data of the conventional digital broadcasting service. The second encoding unit 310 encodes the additional data for a new service or a high quality service.

The data encoded in the first encoding unit 300 and the data encoded in the second encoding unit 310 are hierarchically mapped to an an in-phase and quadrature-phase (IQ) signal together in the hierarchical mapping unit 320, and applies a high-order modulation method in the modulation unit 330, thereby performing orthogonal modulation.

More specifically, in order to transmit two input streams through one satellite channel, a conventional satellite DMB signal is set as a high priority (HP) and a new hierarchical signal is set as a low priority (LP). Based on these settings, the two signals HP and LP are mixed together in the mapping and modulation processes, and then, transmitted. According to the method, a predetermined envelope is formed and the signal is transmitted in a saturated region by using one transponder

With the thus transmitted data, a conventional terminal determines through signal interpretation in each quadrant that two constellation points in each quadrant are conventional noisy signals, and based on the determination, processes the points. In the case of a new terminal, signal components related to the two constellation points in one quadrant are distinguished and data added to the components is extracted. In this way, the conventional terminal can continuously receive the conventional service without any restriction, and the new terminal can use the newly added additional service as well as the conventional service.

FIG. 4 is a diagram illustrating a structure of a satellite DMB transmission system using hierarchical 16-ary amplitude and phase shift keying (16APSK) according to an embodiment of the present invention.

The transmission apparatus sets conventional data encoded in a first encoding unit 300 as an HP, and additional data encoded in a second encoding unit 310 as an LP, and maps the data into an IQ signal together in a hierarchical mapping unit 320. In a 16APSK modulation unit 400, the IQ signal is orthogonally modulated with a preset deflection angle value by a 16APSK method, and then transmitted.

In the 16APSK method, a total of 16 points are expressed on I-Q coordinates and these points are referred to as constellation points, each of which is expressed by a combination of four bits.

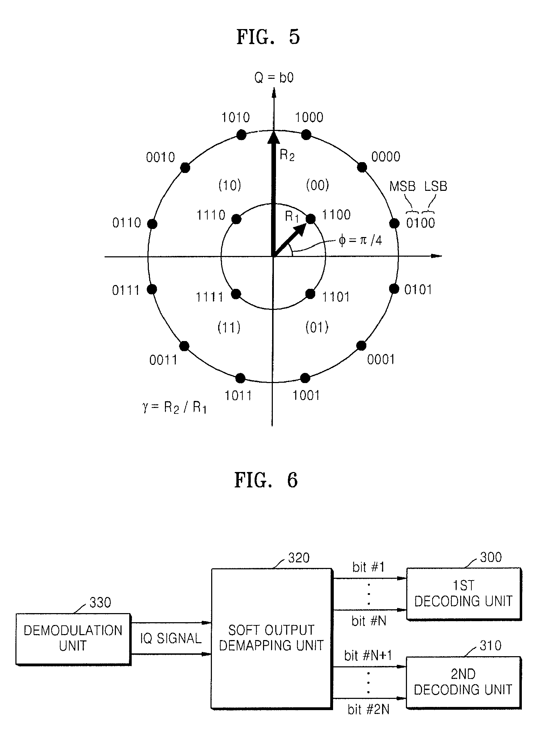

FIG. 5 is a diagram illustrating a hierarchical 16APSK constellation diagram used in the present invention according to an embodiment of the present invention. FIG. 5 illustrates defined constellation points which are to be used in a hierarchical 16APSK modulation method on an I-Q coordinate system, and four bits of each constellation point are defined in order of b3b2b1b0.

FIG. 6 is a diagram illustrating a structure of a DMB reception apparatus using a high-order hierarchical demodulation method according to an embodiment of the present invention.

Referring to FIG. 6, the reception apparatus is composed of a demodulation unit 610, a soft output demapping unit 620, a first decoding unit 630, and a second decoding unit 640. The reception apparatus extracts and uses additional data for a new service or a high quality service as well as transmission data of conventional digital broadcasting services.

The demodulation unit 610 orthogonally demodulates a received signal by using a high-order demodulation method. The soft output demapping unit performs soft output of the demodulated IQ signal for each bit, and bit-splits the same number of bits as the order of the high-order modulation. In the IQ signal, signal components related to two constellation points in one quadrant are distinguished and data added to the signal components are extracted.

The first decoding unit 630 decodes a signal which is extracted as an HP from the signals bit-splited by soft output. The data decoded in the first decoding unit 630 is used for conventional digital broadcasting services.

The second decoding unit 640 decodes a signal which is extracted as an LP from the signals bit-splited by soft output. The data decoded in the second decoding unit 640 is used for new or high quality services.

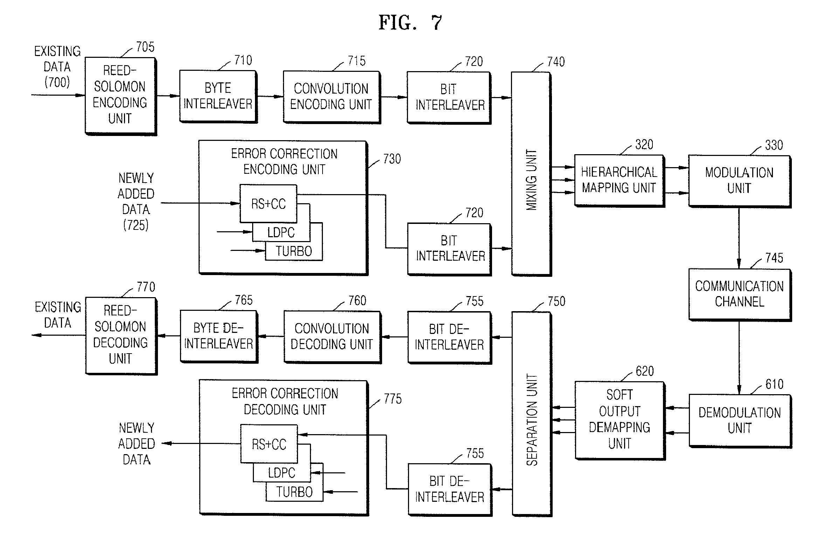

FIG. 7 is a diagram illustrating a structure of a transmission and reception system using hierarchical high-order modulation according to an embodiment of the present invention.

Referring to FIG. 7, the transmission and reception system has two paths, and the top path is the path of conventional satellite DMB services, while the bottom path is the path of a new service.

The transmission system is expressed in detail with a focus centered on the first encoding unit 300 and the second encoding unit 310 illustrated in FIG. 3. That is, conventional data 700 is encoded by using Reed-Solomon coding in a Reed-Solomon encoding unit 705, interleaved in units of bytes in a byte interleaver 710, and then, convolution encoded in a convolution encoding unit 715, and bit-interleaved in a bit interleaver 720 as in FIG. 1. Separately from the conventional data 700, newly added data 725 is error-correction encoded in an error correction encoding unit 730, and bit-interleaved in a bit interleaver 720. As error correction codes, a Reed-Solomon code, a turbo code, a low-density parity check (LDPC) code and the like can be used.

In order to use a hierarchical modulation method, deterioration of a conventional signal should be minimized between the conventional signal (HP) and the newly added signal (LP). In order to improve the performance of the new signal when the deterioration of the conventional signal is minimized, encoding of the new signal by using a strong error correction encoding method is necessary.

Accordingly, for the new signal, a repetitive code which is an error correction code with an excellent performance should be used, and representative repetitive codes include a turbo code and an LDPC code. In the present invention, an embodiment to which the LDPC code is applied will be explained.

The LDPC code is a kind of error correction code. Although the code cannot guarantee perfect transmission, the LDPC code can reduce the probability of information loss to a desired degree as is possible. Accordingly, the LDPC code can allow the transmission rate of data to be maintained at a level close to Shannon limit.

A mixing unit 740 mixes a signal obtained by encoding the conventional data 700 and a signal obtained by encoding the newly added data 725. A hierarchical mapping unit 320 sets the encoded signal of the conventional data 700 as an HP and the encoded signal of the newly added data as an LP and maps the signals to an IQ signal. A modulation unit 330 orthogonally modulates the hierarchically mapped IQ signal by using a high-order modulation method.

A demodulation unit 610 orthogonally demodulates a signal received through a communication channel 745, by using a high-order demodulation method. A soft output demapping unit 620 performs soft output of the demodulated signal for each bit, and bit-splits the same number of bits as the order of the high-order modulation by soft output. A separation unit 750 separates and extracts an HP stream and an LP stream.

The signal separated and extracted as the HP stream is bit de-interleaved in a bit de-interleaver 755, decoded in a Viterbi decoding unit 760, de-interleaved in a byte de-interleaver 765, and decoded in a Reed-Solomon decoding unit 770 by using a Reed-Solomon method, as in FIG. 2, thereby obtaining data for conventional satellite DMB services

The signal separated and extracted as the LP stream is bit-interleaved in the bit-interleaver 755 and then, can be decoded in a decoding unit 775 for the error correction code

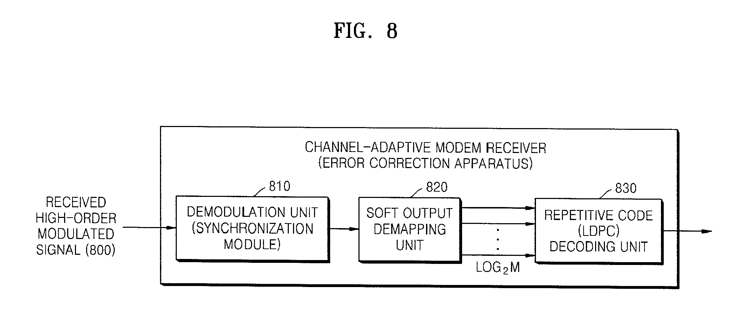

FIG. 8 is a diagram illustrating a structure of a reception apparatus using an LDPC encoding and high-order hierarchical modulation method according to an embodiment of the present invention, and illustrates in detail the new service path in the reception system illustrated in FIG. 7.

As an LDPC encoded signal is high-order modulated, the reception apparatus bit-splits the same number of bits as the order of the high-order modulation in the soft output demapping unit 820 after the received signal 800 is synchronized and demodulated in the demodulation unit 810.

The present invention suggests a log likelihood ratio (LLR) method which has almost the same performance as that of a conventional soft output demapping method, which is easy to implement in hardware and can provide an optimum performance. Conventional LLR methods can provide optimum capacity in terms of performance, but because of using expressions such logarithmic functions and exponential functions, implementation of hardware is complicated. Meanwhile, methods of simplifying the complicated structure of the LLR methods have drawbacks in that deterioration is more serious than that of the LLR methods in terms of bit error ratio (BER) performance.

The LLR method suggested by the present invention removes the logarithmic function and exponential function of the conventional LLR methods and use only comparison operations. Accordingly, implementation of the method in hardware is simple and in the aspect of the BER performance, a soft output technique expressed as equation 1 below which has almost the same BER performance as that of the conventional LLR methods is suggested.

$$LLR[b0] = \{ \max(P_0, P_1, P_2, P_3, P_4, P_5, P_6, P_7, P_8, P_9, P_{10}, P_{11}, P_{12}, P_{13}, P_{14}, P_{15})$$
$$- \max(P_{16}, P_{17}, P_{18}, P_{19}, P_{20}, P_{21}, P_{22}, P_{23}, P_{24}, P_{25}, P_{26}, P_{27}, P_{28}, P_{29}, P_{30}, P_{31})\}$$

$$LLR[b1] = \{ \max(P_0, P_1, P_2, P_3, P_4, P_5, P_6, P_7, P_{16}, P_{17}, P_{18}, P_{19}, P_{20}, P_{21}, P_{22}, P_{23})$$
$$- \max(P_8, P_9, P_{10}, P_{11}, P_{12}, P_{13}, P_{14}, P_{15}, P_{24}, P_{25}, P_{26}, P_{27}, P_{28}, P_{29}, P_{30}, P_{31})\}$$

$$LLR[b2] = \{ \max(P_0, P_1, P_2, P_3, P_8, P_9, P_{10}, P_{11}, P_{16}, P_{17}, P_{18}, P_{19}, P_{24}, P_{25}, P_{26}, P_{27})$$
$$- \max(P_4, P_5, P_6, P_7, P_{12}, P_{13}, P_{14}, P_{15}, P_{20}, P_{21}, P_{22}, P_{23}, P_{28}, P_{29}, P_{30}, P_{31})\}$$

$$LLR[b3] = \{ \max(P_0, P_1, P_4, P_5, P_8, P_9, P_{12}, P_{13}, P_{16}, P_{17}, P_{20}, P_{21}, P_{24}, P_{25}, P_{28}, P_{29})$$
$$- \max(P_2, P_3, P_6, P_7, P_{10}, P_{11}, P_{14}, P_{15}, P_{18}, P_{19}, P_{22}, P_{23}, P_{26}, P_{27}, P_{30}, P_{31}) \}$$

$$LLR[b4] = \{ \max(P_0, P_2, P_4, P_6, P_8, P_{10}, P_{12}, P_{14}, P_{16}, P_{18}, P_{20}, P_{22}, P_{24}, P_{26}, P_{28}, P_{30})$$
$$- \max(P_1, P_3, P_5, P_7, P_9, P_{11}, P_{13}, P_{15}, P_{17}, P_{19}, P_{21}, P_{23}, P_{25}, P_{27}, P_{29}, P_{31}) \}$$

where,

$$P_i = \frac{-\|r - s_i\|^2}{2\sigma^2} \quad \text{where}, \ i = 0, \ldots, 31$$

$$\ldots\ldots(1)$$

In equation 1, "$r$" is a reception symbol, "$i$" is a decimal expression of a four-bit string, "$s_i$" is a constellation point (coordinates), and "$\sigma^2$" is a distribution in an additive white Gaussian noise (AWGN) channel environment.

In short, $P_i$ indicates the distance value between the reception signal (r) and the constellation coordinates ($s_i$). In the case of 32APSK, $P_0$ is "00000", $P_1$ is "00001", $P_2$ is "00010", $P_3$ is "00011", $P_4$ is "00100", $P_5$ is "00101", $P_6$ is "00110", $P_7$ is "00111", $P_8$ is "01000", $P_9$ is "01001", $P_{10}$ is "01010", $P_{11}$ is "01011", $P_{12}$ is "01100", $P_{13}$ is "01101", $P_{14}$ is "01110", $P_{15}$ is "01111", $P_{16}$ is "10000", $P_{17}$ is "10001", $P_{18}$ is "10010", $P_{19}$ is "10011 ", ..., $P_{30}$ is "11110", and $P_{31}$ is "11111". Also, "b0, b1,b2, b3, b4, b5" are respective bits when symbols are mapped from the 32APSK constellation points illustrated in FIG. 5, and "LLR[b0], LLR[b1], LLR[b2], LLR[b3], LLR[b4]" are the probability values of the respective bits b0, b1, b2, b3, b4, and b5, and the output of the soft output technique.

In the case of 16APSK, the method is expressed as equation 2 below.

$$LLR[b3] = \{ \max(P_0, P_1, P_2, P_3, P_4, P_5, P_6, P_7) - \max(P_8, P_9, P_{10}, P_{11}, P_{12}, P_{13}, P_{14}, P_{15}) \}$$

$$LLR[b2] = \{ \max(P_0, P_1, P_2, P_3, P_8, P_9, P_{10}, P_{11}) - \max(P_4, P_5, P_6, P_7, P_{12}, P_{13}, P_{14}, P_{15}) \}$$

$$LLR[b1] = \{ \max(P_0, P_1, P_4, P_5, P_8, P_9, P_{12}, P_{13}) - \max(P_2, P_3, P_6, P_7, P_{10}, P_{11}, P_{14}, P_{15}) \}$$

$$LLR[b0] = \{ \max(P_0, P_2, P_4, P_6, P_8, P_{10}, P_{12}, P_{14}) - \max(P_1, P_3, P_5, P_7, P_9, P_{11}, P_{13}, P_{15}) \}$$

where,

$$P_i = \frac{-\|r - s_i\|^2}{2\sigma^2} \quad \text{where}, \ i = 0, \ldots, 15$$

$$\ldots\ldots(2)$$

If a channel code is an LDPC code, the value obtained by bit-splitting the same number of bits as the order of the high-order modulation by soft output is input from the soft output demapping unit 820, and errors are corrected in an LDPC code decoder 830 by using an adaptive demodulation signal and modulation method information. In this way, performance close to the Shannon limit is obtained. However, although the LDPC code is explained as an error correction code in the present invention, other error correction codes such as a Reed-Solomon code and a turbo code, can also be applied. Accordingly, the error correction coding method to which the present invention is applied is not limited to the LDPC code.

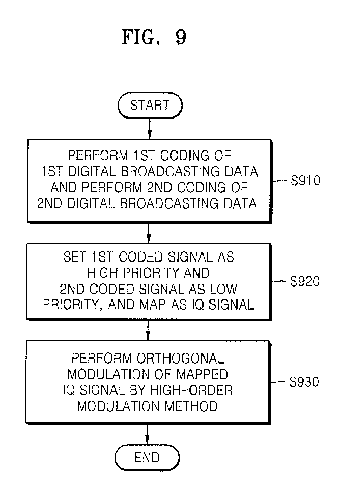

FIG. 9 is a flowchart illustrating a satellite DMB transmission method using a high-order hierarchical modulation method according to an embodiment of the present invention.

Referring to FIG. 9, first digital broadcasting data which is conventional DMB data is first-encoded, and second digital broadcasting data which is additional data for a new service or high quality service, is second-encoded in operation S910. In the case of a conventional satellite DMB signal, Reed-Solomon coding and convolution coding are applied. However, in order to use a hierarchical modulation method, it is necessary to apply a strong error correction coding method to the signal for the new service, thereby maximizing the performance of the signal for the new service. Accordingly, the present invention suggests an embodiment to which an LDPC code, which is an error correction code having an excellent performance in relation to the signal for the new service, is applied.

Then, the signal obtained by encoding the first digital broadcasting data is set as a high priority (HP) and the signal obtained by encoding the second digital broadcasting data is set as a low priority (LP), thereby hierarchically mapping the data to an IQ signal in operation S920.

Finally, the hierarchically mapped IQ signal is orthogonally mapped by a high-order modulation method in operation S930, thereby generating a signal to be transmitted.

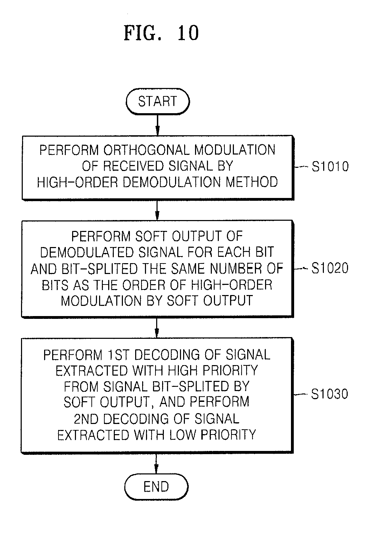

FIG. 10 is a flowchart illustrating a satellite DMB reception method using a high-order hierarchical modulation method according to an embodiment of the present invention.

Referring to FIG. 10, first, a received signal is demodulated by a high-order demodulation method in operation S1010.

Then, the demodulated signal is soft output in relation to each bit and the same number of bits as the order of the high-order modulation are bit-splited in operation S1020.

Then, a signal extracted as the HP from the signals bit-splited by soft output is first-decoded, and a signal extracted as the LP from the signals bit-splited by soft output is second-decoded in operation S1030

The signal extracted as the HP is obtained by encoding the conventional satellite DMB data by using Reed-Solomon coding or convolution coding, and is usually decoded by using a Viterbi decoding method or a Reed-Solomon decoding method.

Meanwhile, the signal extracted as the LP is obtained by encoding data added for the new service or high quality service, by using an error correction code having good performance If an error correction code such as the LDPC as illustrated in the present invention is used, the probability of information loss can be minimized to a level close to the Shannon limit which is the theoretical maximum value.

As described above, the present invention can achieve an increase in the capacity of transmission as illustrated in table 1 below, compared to conventional satellite DMB systems. That is, while in the conventional bandwidth, using 11 video channels and 26 audio channels, the present invention defines data to be newly added so that a new channel can be used in addition to the conventional video and audio channel, and by using a hierarchical modulation method, the present invention can increase the number of video channels from the existing 11 to 16 or 19 according to the encoding rate of a channel codec.

Table 1

| Encoding ratio | Transmission capacity increase ratio |
|---|---|
| 1/2 | 92.15% |
| 2/3 | 69.11% |
| 3/4 | 61.43% |

In addition, even when the hierarchical modulation method is applied, it have no influence on the services which existing users have received. Accordingly, the existing terminals do not recognize a big change, and therefore the method can be efficiently applied to a variety of multimedia broadcasting services. The method can be specifically achieved by increasing of the number of channels and providing new services, and can be regarded as a method having a very distinctive character compared to other portable multimedia services. Based on these advantages, the method is expected to be utilized as an improved digital broadcasting system to cope with other multimedia services newly emerging.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While the present invention has been particularly shown and described with reference to exemplary embodiments thereof, it will be understood by those of ordinary skill in the art that various changes in form and details may be made therein without departing from the spirit and scope of the present invention as defined by the following claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. An apparatus for digital broadcast transmission comprising:

    a first encoding unit performing first-encoding of first digital broadcasting data;
    a second encoding unit performing second-encoding of second digital broadcasting data;
    a hierarchical mapping unit performing hierarchical mapping of the data to an in-phase and quadrature-phase IQ signal, by setting the first-encoded signal as a high priority (HP), and the second-encoded signal as a low priority (LP); and
    a modulation unit performing orthogonal modulation of the hierarchically mapped IQ signal by a high-order modulation method.

2. The apparatus of claim 1, wherein the high-order modulation method is a 16-ary amplitude and phase shift keying (16APSK) method.

3. The apparatus of claim 1 or 2, wherein the second encoding method is a low density parity check (LDPC) method.

4. A method of digital broadcast transmission comprising:

    performing first-encoding of first digital broadcasting data and performing second-encoding of second digital broadcasting data;
    performing hierarchical mapping of the data to an IQ signal, by setting the first-encoded signal as an HP, and the second-encoded signal as an LP; and
    performing orthogonal modulation of the hierarchically mapped IQ signal by a high-order modulation method.

5. The method of claim 4, wherein in the performing of the orthogonal modulation, the high-order modulation method is a 16APSK method.

6. The method of claim 4 or 5, wherein in the performing of the first-encoding and second-encoding, the second encoding method is an LDPC method.

7. A method of digital broadcast reception comprising:

    performing orthogonal demodulation of a received signal in a high-order demodulation method;
    bit-spliting the same number of bits as the order of the high-order modulation, by performing soft output of the demodulated signal for each bit;
    performing first-decoding of a signal which is extracted with an HP from the signals bit-splited by soft output, and performing second-decoding of a signal which is extracted with an LP from the signals bit-splited by soft output.

8. The method of claim 7, wherein in the performing of the orthogonal modulation, the high-order modulation method is a 16APSK method.

9. The method of claim 7 or 8, wherein in the performing of the first-decoding and second-decoding, the second decoding method is an LDPC method.

10. The method of claim 7, 8 or 9, wherein in the soft output method, a distance value between a reception signal and constellation coordinates is obtained in relation to each bit, and a difference between the maximum values is obtained by obtaining a difference between a maximum value of distance values in which a bit corresponding to a bit for which the soft output is performed in a bit string of the constellation point is 0, and a maximum value of the distance values in which a bit corresponding to the bit for which the soft output is performed in the bit string of the constellation point is 1.

FIG. 1 (PRIOR ART)

# FIG. 2 (PRIOR ART)

EP 1 959 593 A2

## FIG. 3

| 300 | bit #1 | 320 | | 330 |

1ST ENCODING UNIT — bit #1 ... bit #N → HIERARCHICAL MAPPING UNIT → IQ SIGNAL → MODULATION UNIT

2ND ENCODING UNIT 310 — bit #N+1 ... bit #2N →

## FIG. 4

1ST ENCODING UNIT 300 — bit #1 ... bit #2 → HIERARCHICAL MAPPING UNIT 320 → IQ SIGNAL → 16 ASPK MODULATION UNIT 330

2ND ENCODING UNIT 310 — bit #3 ... bit #4 →

# FIG. 5

# FIG. 6

# FIG. 7

EXISTING DATA (700) → REED-SOLOMON ENCODING UNIT /705 → BYTE INTERLEAVER /710 → CONVOLUTION ENCODING UNIT /715 → BIT INTERLEAVER /720 → MIXING UNIT /740

ERROR CORRECTION ENCODING UNIT /730
- RS+CC
- LDPC
- TURBO

NEWLY ADDED DATA (725) → ERROR CORRECTION ENCODING UNIT

BIT INTERLEAVER /720 → MIXING UNIT

MIXING UNIT → HIERARCHICAL MAPPING UNIT /320 → MODULATION UNIT /330

MODULATION UNIT → COMMUNICATION CHANNEL /745

EXISTING DATA ← REED-SOLOMON DECODING UNIT /770 ← BYTE DE-INTERLEAVER /765 ← CONVOLUTION DECODING UNIT /760 ← BIT DE-INTERLEAVER /755 ← SEPARATION UNIT /750

ERROR CORRECTION DECODING UNIT /775
- RS+CC
- LDPC
- TURBO

NEWLY ADDED DATA ← ERROR CORRECTION DECODING UNIT

BIT DE-INTERLEAVER /755 ← SEPARATION UNIT

SEPARATION UNIT ← SOFT OUTPUT DEMAPPING UNIT /620 ← DEMODULATION UNIT /610

COMMUNICATION CHANNEL → DEMODULATION UNIT

EP 1 959 593 A2

14

# FIG. 8

EP 1 959 593 A2

CHANNEL-ADAPTIVE MODEM RECEIVER
(ERROR CORRECTION APPARATUS)

RECEIVED
HIGH-ORDER
MODULATED
SIGNAL (800)

810
DEMODULATION UNIT
(SYNCHRONIZATION
MODULE)

820
SOFT OUTPUT
DEMAPPING
UNIT

830
REPETITIVE CODE
(LDPC)
DECODING UNIT

$LOG_2 M$

FIG. 9

START

PERFORM 1ST CODING OF
1ST DIGITAL BROADCASTING DATA
AND PERFORM 2ND CODING OF
2ND DIGITAL BROADCASTING DATA ⎯ S910

SET 1ST CODED SIGNAL AS
HIGH PRIORITY AND
2ND CODED SIGNAL AS LOW
PRIORITY, AND MAP AS IQ SIGNAL ⎯ S920

PERFORM ORTHOGONAL
MODULATION OF MAPPED
IQ SIGNAL BY HIGH-ORDER
MODULATION METHOD ⎯ S930

END

## FIG. 10

START

PERFORM ORTHOGONAL MODULATION OF RECEIVED SIGNAL BY HIGH-ORDER DEMODULATION METHOD — S1010

PERFORM SOFT OUTPUT OF DEMODULATED SIGNAL FOR EACH BIT AND BIT-SPLITED THE SAME NUMBER OF BITS AS THE ORDER OF HIGH-ORDER MODULATION BY SOFT OUTPUT — S1020

PERFORM 1ST DECODING OF SIGNAL EXTRACTED WITH HIGH PRIORITY FROM SIGNAL BIT-SPLITED BY SOFT OUTPUT, AND PERFORM 2ND DECODING OF SIGNAL EXTRACTED WITH LOW PRIORITY — S1030

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060123397

- KR 1020070049956